# EUROPÄISCHE PATENTSCHRIFT

(11) **EP 2 765 713 B1**
(45) Veröffentlichungstag und Bekanntmachung des Hinweises auf die Patenterteilung: **30.11.2016**
(21) Anmeldenummer: 14154301.7
(22) Anmeldetag: 07.02.2014
(51) Int. Cl.: H04B 3/54, H04L 12/10

(54) **Verfahren zum Bereitstellen von Strom für mindestens einen an ein Busgerät angeschlossenen Verbraucher und Vorschalteinrichtung für einen Verbraucher**
Method for providing electricity for at least one consumer device for connection to a bus device and ballast device for a consumer
Procédé de mise à disposition de courant pour au moins un consommateur raccordé à un bus et dispositif d'entrée pour un consommateur

(30) Priorität: 08.02.2013 EP 13154618
(43) Veröffentlichungstag der Anmeldung: 13.08.2014
(73) Patentinhaber: Elmos Semiconductor Aktiengesellschaft, 44227 Dortmund (DE)
(72) Erfinder: Leitner, Thomas, 01069 Dresden (DE); Krupar, Jörg, 01069 Dresden (DE)
(74) Vertreter: dompatent von Kreisler Selting Werner - Partnerschaft von Patent- und Rechtsanwälten mbB

(56) Entgegenhaltungen:
- EP-A1- 1 684 457
- DE-A1- 10 147 924
- DE-A1-102006 032 797
- DE-B4-102008 058 296

## Beschreibung

Die vorliegende Anmeldung nimmt die Priorität der europäischen Patentanmeldung 13 154 618.6 vom 8. Februar 2013 in Anspruch.

Die Erfindung betrifft ein Verfahren zum Bereitstellen von Strom für mindestens einen an ein Busgerät angeschlossenen Verbraucher und Vorschalteinrichtung für einen Verbraucher. Die Erfindung betrifft auch ein Busgerät mit einer Vorschalteinrichtung sowie ein Bussystem mit einem solchen Busgerät.

Ein ähnliches Verfahren und eine ähnliche Vorschalteinrichtung sind aus DE-B-10 2005 002 753, DE-B-10 2008 058 296 und EP-A-1 684 457 bekannt.

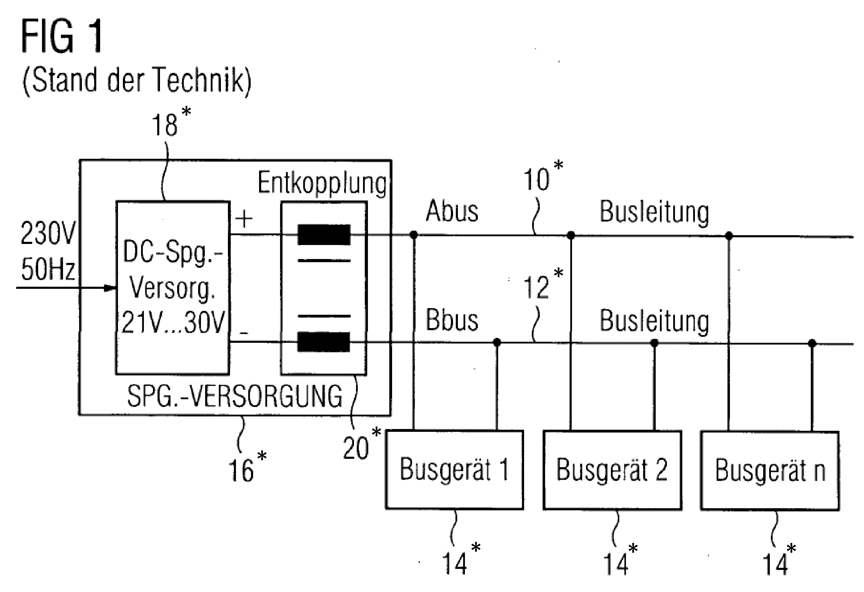

Fig. 1 zeigt ein typisches Bussystem, wie es Stand der Technik ist. Es umfasst zwei Busleitungen, nämlich eine erste Busleitung 10* (Abus) und eine zweite Busleitung 12* (Bbus). An die Busleitungen angeschlossen sind eine Vielzahl von Busgeräten 14*. Exemplarisch gezeigt sind drei Busgeräte (Busgerät 1, Busgerät 2, Busgerät n), wobei diese eine beliebige Zahl n* von Busgeräten repräsentieren. n* kann sehr groß werden, z.B. die Zahl 256 erreichen.

Es ist in dem Bussystem vorgesehen, über die Busleitung 10* und 12* die Busgeräte 14* gleichzeitig mit Spannung und mit Datensignalen zur Ansteuerung der Busgeräte 14* zu versorgen. Eine Spannungsversorgung 16* empfängt über einen Eingang eine typische Netzspannung von 230 V mit 50 Hz Frequenz und wandelt diese in einer Einheit 18* in eine Gleichspannung von z.B. zwischen 21 V und 30 V um. Zwischen der Einheit 18* und den Busleitungen 10* und 12* findet eine Entkopplung statt (Einheit 20*).

Weil über die Busleitungen 10* und 12* sowohl die von der Spannungsversorgung 18* erzeugte Gleichspannung übertragen wird als auch Datensignale, muss seitens der Busgeräte 14* gewährleistet sein, dass Spannungsversorgung und Datenübertragung sich nicht gegenseitig beeinträchtigen. Beispielsweise könnte die Datenübertragung durch die Spannungsversorgung in den Busteilnehmern bedämpft werden und dadurch die Übertragungsreichweite abnehmen.

In den Busgeräten gemäß dem Stand der Technik wurde aus diesem Grund ein Eingangsübertrager eingesetzt, der relativ groß und teuer ist und mit einer relativ großen induktiven Belastung einhergeht, die die maximale Anzahl der Busteilnehmer begrenzt.

Ohne einen Eingangsübertrager kommt ein Verfahren und eine Einrichtung zur Spannungsversorgung gemäß DE-B-10 2008 058 296 aus.

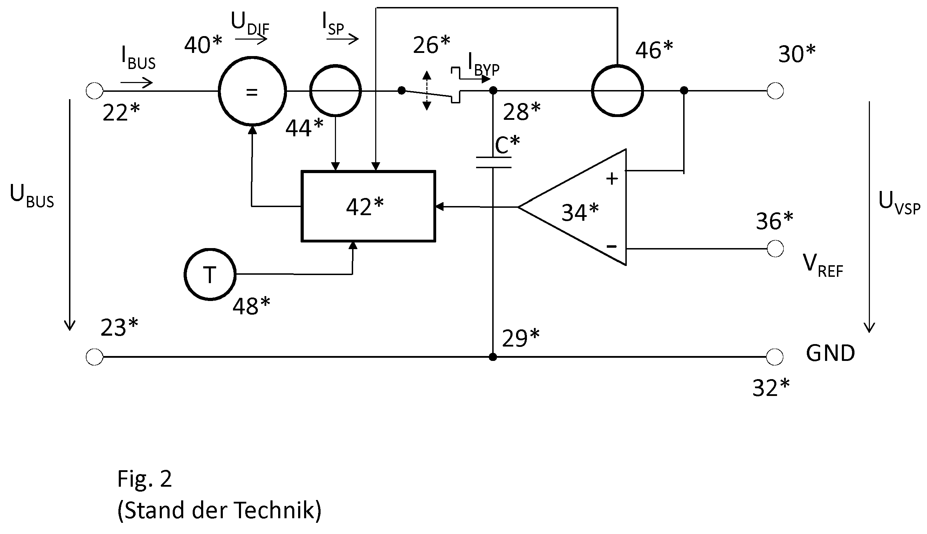

Die Vorschalteinrichtung aus DE-B-10 2008 058 296 ist in Fig. 2 schematisch dargestellt. Zum besseren Vergleich sind die Bezugszahlen in diesem Text identisch gewählt. Allerdings sind sie zur Unterscheidung zu den Bezugszeichen dieses Textes mit einem "*" versehen. Über zwei Eingangsanschlüssen 22* und 23* liegt die Busspannung U_{Bus} an. In Reihe geschaltet befinden sich eine Stromquelle 40*, an der eine Spannung U_{DIF} abfällt, und ein Schalter 26*. Der Strom I_{Bus} wird von der Stromquelle 40* zum Strom Iₛₚ gewandelt. Der Strom I_{SP} wird durch eine Strommesseinrichtung 44µ gemessen. Hinter dem Schalter 26* ist ein Knotenpunkt 28* vorgesehen, der mit einem weiteren Knotenpunkt 29* über einen Kondensator C* verbunden ist, der somit zu den Eingängen 22* und 23* parallel geschaltet ist. In Fig. 2 auf der rechten Seite steht am Ausgang 30* die Gerätespannung Uᵥₛₚ zur Verfügung, und zwar gegen Masse (d.h. Ausgang 32*). Die Vorrichtung gemäß der technischen Lehre nach DE-B-10 2008 058 296 verwendet den Ansatz, dass über weitere Messglieder 44*,46*,34*,48* weitere Informationen gesammelt werden, die die Stromquelle 40* über eine Stelleinrichtung 42* steuern. Hierbei wird die Temperatur der Vorschalteinrichtung und insbesondere der Stromquellentransistoren über einen Temperatursensor 48* erfasst. Die Ausgangsspannung U_{VSP} wird über einen Differenzverstärker 34* erfasst, der die Spannung U_{VSP} mit einer nicht weiter spezifizierten Referenzspannung V_{REF} vergleicht. Die Strommesseinrichtung für den Verbraucherstrom I_{VSP} wird über die Messeinrichtung 46* erfasst und der Stelleinrichtung 42*zugeführt.

In DE-B-10 2008 058 296 ist offenbart (siehe die letzten acht Zeilen des Absatzes 0007), dass der Schalter 26* auf eine Abzweigschaltung umschaltet, wenn die Busspannung U_{BUS} absinkt. Der Schalter 26* ist also (bus-) spannungsgesteuert, schaltet also nicht in Abhängigkeit von der Größe des Stroms oder einem aus diesem abgeleiteten Parameter.

Die in DE-B-10 2008 058 296 offenbarte Technik hat jedoch den Nachteil, dass bei einem zu niedrigen Lastwiderstand der Strom der Stromquelle begrenzt wird. Hierdurch wird nicht die maximal erlaubte Energiemenge dem Bus entnommen, sondern der Strom begrenzt. Günstiger wäre es jedoch, die maximal mögliche Energiemenge den Verbrauchern solange zur Verfügung zu stellen, bis definitiv kein Verbraucher ohne Verletzung anderer höher priorisierter Bedingungen, wie beispielsweise Betriebstemperatur oder maximale Energieentnahme mehr aus dem Bus versorgt werden kann.

Bei der Anordnung gemäß Fig. 1 muss gewährleistet sein, dass sämtliche Busgeräte 14* auch in Extremfällen mit Energie versorgt werden können. Ein Extremfall liegt dann vor, wenn jedes einzelne der Busgeräte 14* einen maximalen Strom I_{BUSmax} zieht. Die Summe der maximalen Stromstärken I_{BUSmax} zu sämtlichen Busgeräten 14* darf nicht die maximal durch die Spannungsversorgung 16* bereitstellbare Stromstärke überschreiten. Somit bewirkt die Möglichkeit des Ziehens eines sehr hohen Stroms I_{BUSmax} durch die Busgeräte, dass die Gesamtanzahl der Busgeräte klein ist. Je kleiner I_{BUSmax} ist, desto mehr Busgeräte können an den Bus angeschlossen werden.

Es ist Aufgabe der Erfindung, einen Weg aufzuzeigen, wie die Zahl der Busgeräte, die an einem Bus mit vorgegebener Spannungsversorgung anschließbar sind, gesteigert werden kann, ohne dass die Funktionsweise der Busgeräte beeinträchtigt wird und gleichzeitig an jedem Knoten die vorgegebene maximale Stromstärke I_{BUSmax} auch tatsächlich entnommen werden kann.

Die Aufgabe wird durch ein Verfahren gemäß Patentanspruch 1 und eine Vorschalteinrichtung gemäß Patentanspruch 8 gelöst. Erfindungsgemäß werden ferner ein Busgerät mit der erfindungsgemäßen Vorschalteinrichtung sowie ein Bussystem mit solchen Busgeräten bereitgestellt. Einzelne Ausgestaltungen der Erfindung sind Gegenstand der Unteransprüche.

Bei dem erfindungsgemäßen Verfahren wird somit von der Stromquelle die jeweils maximale Stromstärke des Busstroms auf einen z.B. durch Programmierung vorgegebenen z.B. quasistatischen Wert begrenzt, der von der Stromstärke des von der Stromquelle bereitgestellten Stroms und/oder der Stromstärke des über die Ausgänge (Lastanschlüsse) fließenden Stroms und/oder der an den Lastanschlüssen anliegenden Spannung und/oder einer im oder am Busgerät gemessenen Temperatur unabhängig ist und/oder der von zumindest einer Zeitableitung dieser Größen (mathematische Ableitung der Größe nach der Zeit) unabhängig ist. Hierdurch unterscheidet sich das Verfahren von demjenigen nach DE-B-10 2008 058 296. Ohne weitere Maßnahmen würde dies aber in genau den Fällen, in denen die Regelung 38* nach DE-B-10 2008 058 296 eingreift, zur Verletzung verschiedener Bedingungen führen.

Die Erfindung beruht auf der Erkenntnis, dass es nicht sinnvoll ist, eine maximale Stromstärke für den Busstrom I_{BUS} für sämtliche Situationen vorzugeben, sondern vielmehr von den gerade vorherrschenden Bedingungen abhängig zu machen. Diese sind typischerweise von den Systemrechnern bekannt. Deshalb ist es ebenfalls nicht unbedingt sinnvoll, die Vorgabe im Vorschaltgerät selbst durchzuführen. Im Folgenden wird daher davon ausgegangen, dass die Systemrechner einen irgendwie vorbestimmten maximalen Entnahmestrom I_{BUSMAX} dem erfindungsgemäßen System vorgegeben haben. Im einfachsten Fall ist dies ein Default-Reset-Wert dieses Wertes, der typischerweise von Null verschieden ist, aber durchaus Null sein kann.

Die Grundidee des erfindungsgemäßen Verfahrens ist es, statt der Stromquelle die Last zu modifizieren, und zwar durch den "Abwurf" von Lasten oder Teilen von Lasten. Die Last besteht typischerweise aus mehreren Sub-Verbrauchern, für die das erfindungsgemäße System ein Vorschaltgerät darstellt.

Die Stromquelle stellt zusammen mit ihrer Steuerung sicher, dass sowohl Anstiegsgeschwindigkeit des Busstromes I_{Bus} als auch die Maximalwerte des Busstromes der Spezifikation des Busses entsprechen.

Ebenso wie DE-B-10 2008 058 296 weist die erfindungsgemäße Vorrichtung nun verschiedene Messmittel auf, die sicherstellen, dass sowohl die Busspezifikation nicht verletzt wird, als auch die Betriebstemperatur nicht überschritten wird als auch die erfindungsgemäße Aufgabe erfüllt wird.

Im Gegensatz zu DE-B-10 2008 058 296 kann die erfindungsgemäße Vorrichtung über mehrere Lasten und damit mehrere Last- bzw. Ausgangsanschlüsse 30*, 32* verfügen. Diese werden zur Unterscheidung von nun an mit 9 und 10 bezeichnet.

Jedem Lastanschluss kann je ein Messmittel zur Messung des Laststromes I_{VSP} für die jeweilige Last zugeordnet sein. Diesem vorgelagert ist ein Schalter, der die Last vom Zwischenknoten trennen kann, ohne den Stützkondensator C vom Bus abzutrennen.

Bei der erfindungsgemäßen Vorschalteinrichtung sind Mittel zum Steuern der steuerbaren Last dazu ausgelegt zu bewirken, dass der Gesamtstrom aller Verbraucher (Lasten), denen die erfindungsgemäße Vorrichtung als Vorschaltgerät vorgeschaltet ist, zuzüglich des Stromverbrauchs der erfindungsgemäßen Vorrichtung selbst in Summe den programmierten maximalen Busstrom I_{BUSMAX} nicht überschreitet. Dabei ist die Strukturierung der Last durch eine Laststeuereinrichtung zumindest von einer vorbestimmten Größe abhängig, die in der Gruppe enthalten ist, welche umfasst:
- a.: die vorgegebene Stromstärke I_{BUSMAX} des von der Stromquelle abgegebenen Stroms
- b.: die Stromstärke eines über einen Ausgang (Lastanschluss) oder mehrere Ausgänge (Lastanschlüsse) in Summe fließenden Stroms
- c.: der Spannungsabfall über der Stromquelle U_{DIF}
- d.: die Spannung am Zwischenspeicherknoten 28*
- e.: die Energiemenge, die in der Stromquelle umgesetzt wird
- f.: die Bus-Versorgungsspannung U_{BUS}
- g.: die Temperatur von Teilen des Vorschaltgerätes, insbesondere der Leistungstransistoren der Stromquelle
- h.: die Temperatur einzelner Verbraucher
- i.: die zwischen den einzelnen Ausgängen (Lastanschlüssen) anliegenden Spannungen
- j.: die an einem oder mehreren Lastanschlüssen einzeln oder in Summe abgegebene elektrische Leistung
- k.: eine im oder am Busgerät herrschende Temperatur
- l.: der Zeitpunkt, insbesondere ein Zeitpunkt bezogen auf ein Synchronisationssignal auf dem Bus
- m.: die erste Zeitableitung der Größen a) bis j)
- n.: die zweite Zeitableitung der Größen a) bis j)
- o.: eine höhere Zeitableitung einer der Größen a) bis j).

Als Puffer in der Regelung dient bevorzugt ein Energiespeicher (nämlich insbesondere ein Kondensator C), der parallel zu den Lastanschlüssen geschaltet ist.

Typischerweise wird nur ein Energiespeicher C verwendet, der vor den Lastabwurfvorrichtungen platziert wird.

Es ist sinnvoll, auch diesen abwerfen zu können. Daher wird ferner weiterhin ein weiterer Schalter vorgesehen, der auch diese kapazitive Last C (bzw. allgemein den Energiespeicher) abwerfen kann, um einen Notbetrieb und eine Ansprechbarkeit des Vorschaltgerätes über den Bus sicherzustellen.

Eine Kombination der erfindungsgemäßen Vorrichtung mit der technischen Lehre der DE-B-10 2008 058 296 ist ausdrücklich denkbar. Hierbei muss die Vorrichtung über Regeln verfügen, die festlegen, ob eine Anpassung des maximalen Busstromes I_{BUSMAX} oder ein Lastabwurf erfolgen soll.

Bei dynamischen Vorgängen ist es sinnvoll, die Lasten nicht gleichzeitig aufzuschalten sondern in einer Reihenfolge, die die Verletzung der durch die Bus-Spezifikation vorgegeben maximalen Busstromanstiegsgeschwindigkeit dI-_{BUS}/dt ausschließt. Die Stromquelle zusammen mit der Stromquellensteuerung sorgen dabei bereits dafür, dass diese Anstiegsgeschwindigkeit nicht überschritten wird. Versuchen jedoch die Verbraucher, zu viel Strom aus der Stromquelle zu erhalten, so führt dies zu einem Absinken der Lastspannungen U_{VSP}. Dem wird in der erfindungsgemäßen Vorrichtung dadurch entgegen gewirkt, dass zusätzliche Lasten entsprechend einem Prioritätsschema erst dann zugeschaltet werden, wenn die Stromquelle den dafür benötigten zusätzlichen Strom I_{SP} liefern kann.

In diesem Zusammenhang ist es sinnvoll, den Ladestrom des Kondensators C (allgemein des Energiespeichers) durch eine eigene Messeinrichtung zu erfassen und zur Steuerung zu verwenden.

Die Erfindung umfasst ferner ein Busgerät mit einer Vorschalteinrichtung nach einem der zuvor genannten Ausführungsbeispiele, wobei in dem Busgerät an zumindest einem Lastanschlusspaar zumindest ein elektrischer Verbraucher angeschlossen ist, der durch das Vorschaltgerät deaktiviert werden kann.

Alternativ kann das Busgerät mit einer Vorschalteinrichtung nach einem der zuvor genannten Ausführungsbeispiele ausgestattet sein, wobei in dem Busgerät an zumindest einem Lastanschlusspaar zumindest ein elektrischer Verbraucher angeschlossen ist, der durch das Vorschaltgerät aktiviert werden kann.

Ferner ist es möglich, dass an dem Busgerät zumindest ein elektrischer Verbraucher angeschlossen ist, der durch das Vorschaltgerät deaktiviert werden kann und der gleichzeitig von einer anderen Energiequelle als dem Bus Energie beziehen kann und dessen Energieaufnahme aus dieser weiteren Energiequelle zumindest zweitweise gegenüber der maximal möglichen Energieaufnahme aus dieser weiteren Energiequelle reduziert ist, wenn dieser besagte Verbraucher durch das Vorschaltgerät bezüglich der Energieaufnahme aus dem Bus deaktiviert ist.

Schließlich umfasst die Erfindung auch ein Bussystem mit einem Bus und einer Mehrzahl von daran über Klemmen angeschlossenen Busgeräten, von denen zumindest eines ein Busgerät mit einem oder mehreren der oben genannten Merkmalen oder eine Vorschalteinrichtung nach einem der zuvor genannten Ausführungsbeispiele aufweist, wobei bevorzugt alle Busgeräte eine Vorschalteinrichtung aufweisen.

Nachfolgend wird eine bevorzugte Ausführungsform der Erfindung unter Bezug auf die Zeichnung beschrieben, in der
- Fig. 1: schematisch ein Bussystem gemäß dem Stand der Technik veranschaulicht,
- Fig. 2: schematisch eine Vorschalteinrichtung gemäß dem Stand der Technik nach DE-B-10 2008 058 296 veranschaulicht,
- Fig. 3: schematisch eine erfindungsgemäße Vorschalteinrichtung veranschaulicht,
- Fig. 4: schematisch eine erfindungsgemäße Vorschalteinrichtung mit mehreren Lasten veranschaulicht und
- Fig. 5: schematisch eine erfindungsgemäße Vorrichtung mit einem kompletten Lastabwurf durch Nutzung der Stromquelle als Lastabtrennschalter und Notlauf-Versorgung von Vorrichtungsteilen durch eine ungeregelte Energieversorgung aus dem Bus.
- Fig. 6: schematisch eine erfindungsgemäße Vorrichtung mit einem kompletten Lastabwurf durch Nutzung der Stromquelle und einer Parallelstromquelle jeweils als Lastabtrennschalter (die Kombination mit dem Ausführungsbeispiel der Fig. 5 wurde aus Übersichtlichkeitsgründen nicht vorgenommen, ist aber Bestandteil der vorliegenden Offenbarung).

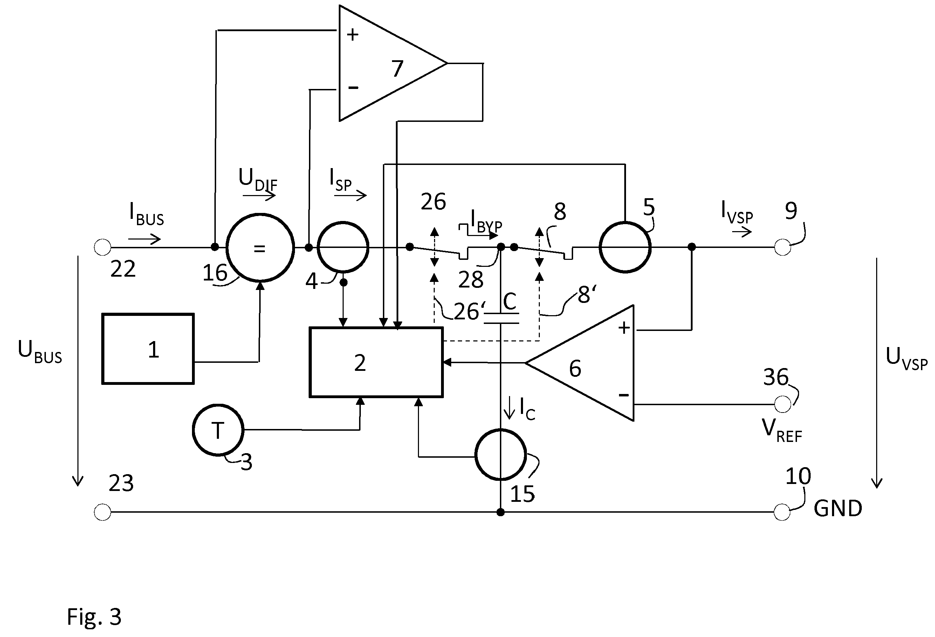

Die in Fig. 2 gezeigte und oben beschriebene Vorschalteinrichtung gemäß dem Stand der Technik, nämlich nach DE-B-10 2008 058 296, wird erfindungsgemäß wie folgt abgewandelt (siehe z.B. das Ausführungsbeispiel der Fig. 3): Es wird eine Stromquelle 16 an der Stelle der bisherigen Stromquelle 40* verwendet, die die Eigenschaft hat, dass sie die Stromstärke des Busstroms I_{Bus} auf einen programmierbaren vorgegebenen Wert I_{BUSMAX} begrenzen kann. Die bisherigen Mittel 42* zum Steuern werden durch Mittel 1 ersetzt, die ausschließlich eine reine Steuerfunktion bezüglich der Stromquelle 16 haben. Zusätzlich werden Steuerungsmittel 2 zum Regeln der Lasten vorgesehen. Um dies bewerkstelligen zu können, wird statt des Ausgangs des Operationsverstärkers 34* den Steuerungsmitteln 2 ein Messwert betreffend die Stromstärke des von der Stromquelle 16 weitergegebenen Stromquellenstroms I_{SP}, welcher von den symbolisch dargestellten Mitteln 4 zum Messen der Stromstärke gemessen wird, zugeführt. Genauso sind Mittel 5 zum Messen der Stromstärke I_{VSP}, also des über die Ausgangsanschlüsse 9 (30* in Fig. 2) und 10 ( bzw. GND, 32* in Fig. 2) fließenden Stromes vorgesehen. Des Weiteren ist es sinnvoll, den Strom I_{VSP} in die Last hinein über diese Messmittel 5 den Steuerungsmitteln 2 zur Verfügung zu stellen. Zusätzlich kann der Ladestrom eines Energiespeichers (z.B. in Form der Kapazität C) über eine weitere Messvorrichtung 15 erfasst und den Steuerungsmitteln 2 zur Verfügung gestellt werden. Ein Messinstrument 3 kann beispielsweise zusätzlich eine Temperatur, beispielsweise die der Leistungstransistoren der Stromquelle 16 erfassen und den Steuerungsmitteln 2 übermitteln. Schließlich ist es sinnvoll, über eine Spannungsmessvorrichtung 6, beispielsweise einen Operationsverstärker, der auf eine Referenzspannung V_{REF} bezogen ist, die Spannung am Lastausgang U_{VSP} zu messen und der Steuerung zur Verfügung zu stellen. Schließlich ist es sinnvoll, die Leistungsparameter der Stromquelle 16 selbst zu erfassen. Hierfür ist es sinnvoll, die Messung des Quellenstromes I_{SP} und der Stromquellenspannung U_{DIF} vorzunehmen. Aus beiden kann die Leistung ermittelt/ berechnet werden. Die Spannungsmessung kann beispielsweise durch einen Operationsverstärker 7 erfolgen, dessen Ausgangswert den Steuerungsmitteln 2 zur Verfügung gestellt wird.

Eine Trennvorrichtung, hier beispielhaft als zusätzlicher Schalter 8 gezeichnet, kann die Last in Abhängigkeit von den so ermittelten Parametern von der Stromquelle 16 trennen. Das entsprechende Steuersignal 8' für die Trennvorrichtung entstammt der Steuerung 2. Der Schalter 8 trennt den (in den Figuren nicht dargestellten) an den Ausgangsanschlüssen 9 und 10 angeschlossenen Verbraucher von dem Energiespeicher (Kapazität C). Als Trennvorrichtung kommt alternativ oder in Ergänzung zum Schalter 8 z.B. auch der Schalter 26 in Betracht, der über ein Steuersignal 26' von den Steuerungsmitteln 2 angesteuert wird.

Diese Steuerungmittel 2 können jedoch von weiteren Parametern abhängig gemacht werden. Beispielsweise ist es besonders vorteilhaft, wenn die Steuerungsmittel 2 selbst ein endlicher Automat (Finite-State-Maschine) oder ein Prozessorsystem sind und selbst Daten und Befehle über den Bus senden und empfangen können. Dies ist in den Figuren zur besseren Übersicht nicht eingezeichnet.

Eine Uhr in einem solchen Steuermittel 2 kann beispielsweise über den Bus an den Klemmen 22 und 23 für alle Satelliten bzw. Busgeräte 14* (siehe Fig. 1) synchronisiert werden. Die Zeit kann nun in Perioden eingeteilt werden. Diese können wiederum in Zeitschlitze aufgeteilt werden. Jedem Busgerät 14* (siehe Fig. 1) kann für jeden Zeitschlitz k nun ein maximaler Busstrom I_{BUSMAXk} zugeordnet werden. Nach Ablauf der Periodendauer wird wieder mit dem zeitlich ersten Zeitschlitz begonnen.

Die Steuerung kann nun in Abhängigkeit von dem Zeitschlitz Verbraucher zuund abschalten, und zwar zeitschlitzgesteuert, und so den vorgegebenen I_{BUS-MAX}-Verlauf einhalten, ohne dass die aktiven Verbraucher eine unzureichende Versorgungsspannung erhalten. Der I_{BUSMAX}-Wert der Stromquelle hängt dabei nicht von den gemessenen Parametern ab. Theoretisch kann dem Bus an den Eingangsanschlüssen 22,23 des/jedes Busgeräts somit immer die maximal erlaubte Leistung entnommen werden. Es können aber ggf. nicht alle Verbraucher betrieben werden.

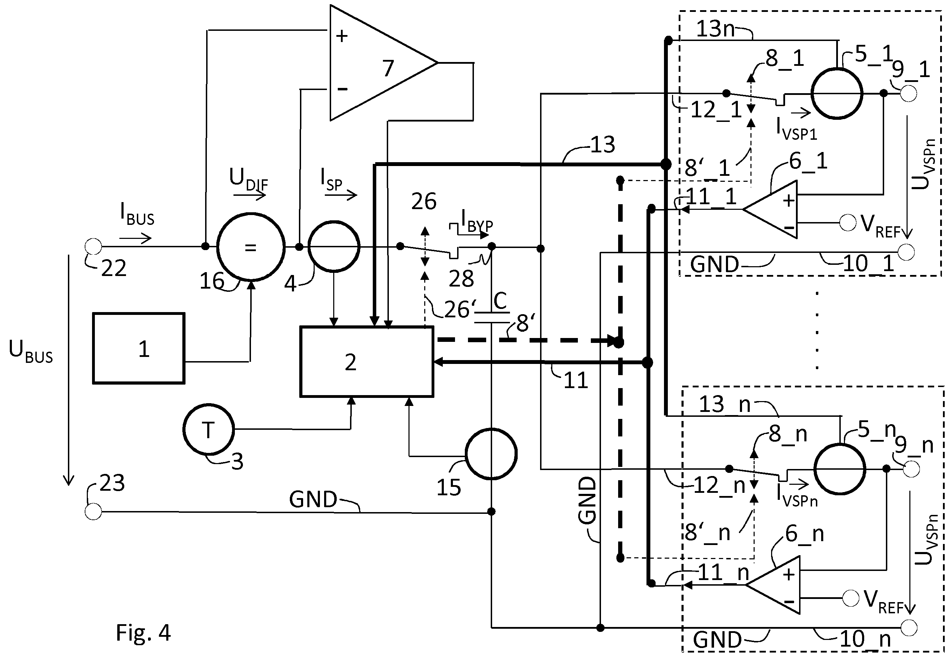

Um dies noch besser zu verdeutlichen, stellt Fig. 4 eine vereinfachte schematische Darstellung eines Systems mit n Verbraucherschnittstellen dar. Die Verbraucherschnittstellen sind mit 9_1 bis 9_n nummeriert. Zur Vereinfachung sind nur die Schnittstellen 1 und n gezeichnet. Die anderen Schnittstellen 2, 3, ... n-1 sind durch Punkte angedeutet. Im Folgenden wird die k-te Schnittstelle betrachtet (k steht dabei für eine Zahl zwischen 1 und n). Zur k-ten Schnittstelle gehört ein Eingang 12_k, der an den Knoten 28 angeschlossen ist. Die-ser kann durch eine Trennvorrichtung 8_k von dem Ausgang 9_k der k-ten Schnittstelle getrennt werden. Eine Messvorrichtung 5_k kann den Ausgangsstrom der Schnittstelle 9_k messen. Die Spannung an diesem Punkt 9_k wird durch eine Spannungsmessvorrichtung 6_k erfasst. Dabei kann es sich wie zuvor um einen Operationsverstärker handeln, der gegen eine Referenzspannung misst. Der andere Pol 10_k ist vorzugsweise mit Masse (GND) verbunden. Dies ist jedoch nur eine Möglichkeit. Theoretisch ist es natürlich auch denkbar, auch hier eine Trennung vorzunehmen, den Strom und die Spannung zu erfassen und mit diesen die Konfiguration mittels der Steuerungsmittel 2 und den Trennvorrichtungen 8_1 bis 8_n und 26 zu steuern. Die Trennvorrichtung 8_k jeder Verbraucherschnittstelle wird über ein Signal 8'_k gesteuert, das das k-te Signal des Ausgabebusses 8' der Steuerungsmittel 2 für die Trennvorrichtungen 8_1, ..., 8_n vorgesehen ist. Anstelle einer Trennvorrichtung kann auch eine Deaktivierung der Last selbst vorgesehen werden, z.B. durch einen "Enable"-Eingang an der Last, der durch ein Signal der Steuermittel 2 auf "disabled" gesetzt wird. Hierbei bedeutet "disabled" (=Deaktivierung), dass die betreffende Last bevorzugt keine oder typischerweise weniger Energie aus dem Bus bezieht und verbraucht, was sich typischerweise in einer geringeren Stromaufnahme der Last äußert. Umgekehrt sollte die Steuervorrichtung auch in der Lage sein, die Last (den Verbraucher) wieder bei Bedarf zu aktivieren. Typischerweise ist es sinnvoll, falls der Verbraucher gleichzeitig Energie aus anderen Quellen erhält, diese Energieaufnahme ebenfalls einzuschränken, so dass eine reduzierte Energieaufnahme aus dem Bus in der Regel mit einer reduzierten Energieaufnahme aus anderen Quellen gekoppelt ist. Besonders bevorzugt ist natürlich eine vollständige Abschaltung des Verbrauchers im Falle einer Deaktivierung. Es sei aber explizit darauf hingewiesen, dass diese Kopplung nicht immer sinnvoll ist. Der Bus 8' zur Steuerung der Lasttrennvorrichtungen 8_1 bis 8_n ist in Fig. 4 gestrichelt eingezeichnet, um besser kenntlich zu sein. Das Spannungsmesssignal 11_k der k-ten Verbraucherschnittstelle ist mit der k-ten Leitung des Spannungsmessbusses 11 verbunden. Dieser Spannungsmessbus 11 wird in den Steuerungsmitteln 2 geführt und dient beispielhaft als eines von möglicherweise mehreren Eingangsparametersignalen. Ebenso wird das Strommesssignal 13_k der k-ten Verbraucherschnittstelle als k-te Leitung des Strommessbusses 13 der Steuerungsmittel 2 zugeführt und ähnlich verarbeitet.

Die Darstellungen in den Fign. 3 und 4 sind nur exemplarisch. In den in Fig. 4 gezeigten Vorschalteinrichtungen sind die wichtigsten Möglichkeiten, die die vorliegende Erfindung bietet, gleichzeitig und auch parallel nutzbar.

Die Erfindung ist bereits verwirklicht, wenn Steuerungsmittel 2 zum Ansteuern einer Lastabtrennung 8 oder 8_1 bis 8_n nur von einem der Mittel 5 oder 5_1 bis 5_n, 6 oder 6_1 bis 6_n, 15, 3, 4 zum Messen nur die entsprechenden Signale oder Informationen erhalten.

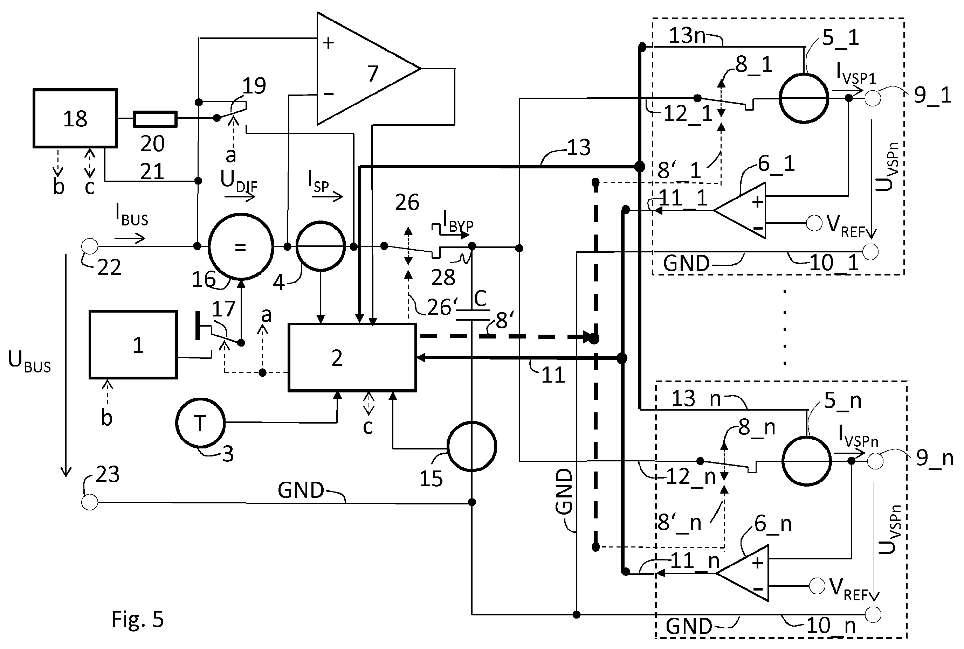

Ein letzter wichtiger Fall ist in Fig. 5 dargestellt. Es kann sinnvoll sein, den Schalter 26 wegzulassen (dieser Schalter ist in Fig. 5 allerdings noch eingezeichnet) und den Stromquellentransistor der Stromquelle 16 als Schalter zum Abwerfen der nachgeordneten Lasten zu benutzen. Dies kann beispielsweise dadurch geschehen, dass die Steuerungsmittel 2 durch einen zusätzlichen Schalter 17 die Steuerleitung der Stromquelle 16 auf ein solches Potenzial fixiert, dass die Stromquelle 16 hochohmig wird und somit abschaltet. In diesem Fall ist es zusätzlich sinnvoll, die Teile 18 des Vorschaltgerätes, die unbedingt weiter kommunikationsbereit sein müssen, durch Umschalten mit einem zweiten zusätzlichen Schalter 19 nicht mehr aus der nunmehr abgeschalteten Stromquelle 16, sondern direkt aus dem Bus zu versorgen. Gegebenenfalls kann dann ein optionaler Vorwiderstand 20 einen Kurzschluss in diesem Teil 18 des Vorschaltgerätes busspezifikationskonform abfangen. Ist die Stromquelle 16 aktiv, so soll deren Funktion eine zu große Stromentnahme aus dem Bus verhindern, d.h. nicht durch die sonstigen Vorschaltgerätteile 18 eingeschränkt werden. Daher ist es sinnvoll, bei arbeitender Stromquelle die Versorgung dieser Teile 18 auch über eine Stromquelle 16 vorzunehmen. An dieser Stelle sei kurz erwähnt, dass es durchaus denkbar ist, mehr als eine Stromquelle 16 (Anzahl m) vorzusehen, die jeweils eine eigene maximale programmierbar vorgebbare Stromstärke I_{SPMAX_j} aufweisen (mit 0<j<m+1 und m=Anzahl der Stromquellen), wobei die Summe dieser m Stromstärken I_{SPMAX_j} kleiner gleich I_{BUSMAX} sein sollte. Sofern dies nicht der Fall ist, kann mindestens eine weitere Gesamtstromquelle den zumindest teilweise auf Busseite sternförmig zusammengeschalteten Stromquellen nochmals vorgeschaltet werden, um so den Gesamtstrom programmierbar auf diesen vorgebbaren Wert I_{BUSMAX} zu begrenzen.

Besonders sinnvoll ist es, wenn diese Teile 18 weiter mit der zentralen Bus-Spannungsversorgung 16* (siehe Fig. 1) oder einem Bus-Master kommunizieren können, und zwar auch dann, wenn der Stromquellenstrom I_{SP} auf null gesetzt ist. Hierdurch können diese Teile 18 beispielsweise auf Veranlassung durch einen anderen Busteilnehmer, insbesondere einen Busmaster oder das Busnetzteil (Spannungsversorgung16* in Fig. 1) die Abschaltung der Stromquelle 16 aufheben und die Steuerungsmittel 2 veranlassen, trotz einer Fehlerbedingung weiter Strom zu entnehmen. Beispielsweise kann der Bus-Master andere Bus-Teilnehmer veranlassen, weniger Strom zu entnehmen und so dem Busgerät mit einer Fehlerbedingung mehr Strom zur Verfügung zu stellen. Insbesondere ist es sinnvoll, dass das betroffene Busgerät vor dem Abwerfen von Lasten den Bus-Master vorwarnt und beispielsweise erst nach einer vorbestimmten Zeit oder dem Vorliegen weiterer Bedingungen die Lasten ggf. sofort oder auch erst nach und nach abwirft. Hierdurch können mehr Busgeräte am Bus betrieben werden als spezifiziert, da diese nicht kontinuierlich gleich viel Strom benötigen.

Des Weiteren ist es sinnvoll, den Abschaltvorgang der Stromquelle 16 so zu gestalten, dass deren Zielwert busspezifikationskonform, im Falle eines KNX Busses insbesondere KNX-konform, mit einer vorbestimmten, programmierbaren Stromstärkenänderung pro Zeiteinheit (dI/dt) auf 0A zurückgefahren wird, um beim Abschalten nicht eventuell auf dem Bus stattfindende Kommunikation zu stören. Dementsprechend bedeutet ein busspezifikationskonformes, insbesondere KNX-konformes, Abschalten, dass sich der Strom in der Stromquelle insbesondere rampenförmig mit einer geeignet begrenzten Rampengeschwindigkeit ändert.

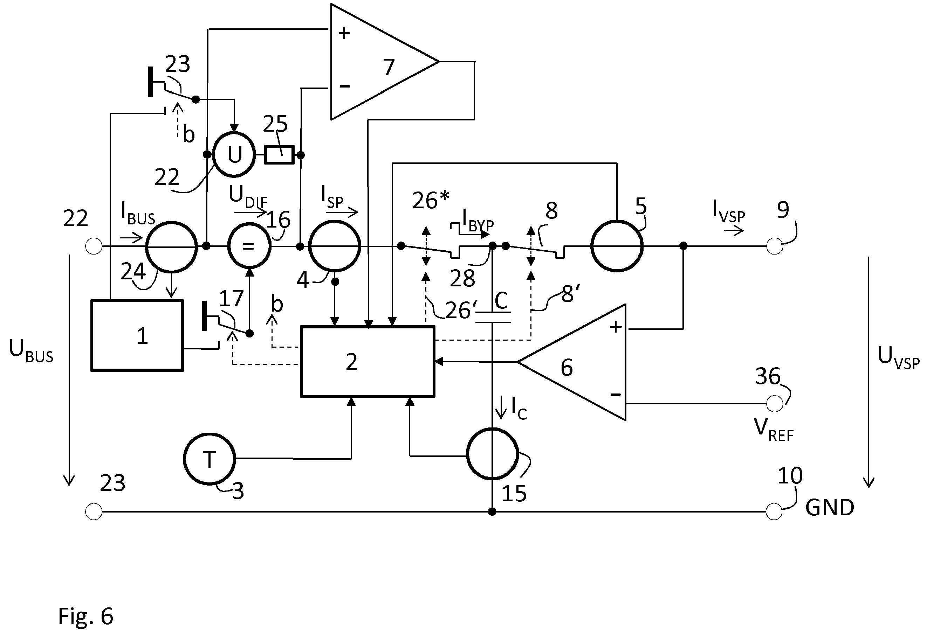

In besonderen Fällen kann es sinnvoll sein, dass das Mittel 1 zum Steuern der Stromquelle 16 von einer Vorrichtung 24 zum Messen des Stroms I_{Bus} ein Signal empfängt und damit die Stromquelle 16 derart steuert, dass der Strom I_{Bus} dem Strom der Stromquelle 16 entspricht, und zwar unabhängig davon, welchen Strom andere Netzwerkelemente, wie z.B. Spannungsquellen , Widerstände bzw. der Widerstand 25, Messverstärker, zusätzlich zur Stromquelle 16 einspeisen (siehe Fig. 6). Der Vorteil dieser Vorgehensweise ist beispielsweise, dass parasitäre Ströme des Netzwerks aus z.B. dem Mittel 4 zum Messen des Stroms I_{SP}, der Potenzialmessvorrichtung 7 zur Messung von U_{DIF}, der Mittel 5 zum Messen des Stroms I_{VSP}, der Potenzialmessvorrichtung 6 zur Messung von U_{VSP} und/oder der Vorrichtung 15 zum Messen des Ladestroms I_{C} des Kondensators C, bei der Einhaltung des exakt einzuhaltenden Stroms I_{Bus} berücksichtigt werden können, was die Präzision der Maximalstromeinhaltung erhöht, wie dies z.B. von dem Bus-Standard bzw. von dem Bus-Protokoll gefordert sein kann.

Obwohl die Erfindung zur besseren Veranschaulichung anhand bestimmter Ausführungsbeispiele beschrieben und dargestellt wurde, wird darauf hingewiesen, dass die Erfindung nicht auf diese veranschaulichenden Ausführungsbeispiele beschränkt ist. Fachleuten wird ersichtlich sein, dass Variationen und Modifikationen vorgenommen werden können, ohne von dem tatsächlichen Schutzumfang der Erfindung abzuweichen, der durch die folgenden Ansprüche definiert ist. Der Schutzumfang der Erfindung umfasst somit sämtliche derartigen Variationen und Modifikationen, die unter den Schutzumfang der beigefügten Ansprüche fallen, sowie Äquivalente dieser Variationen und Modifikationen.

### Liste der Bezugszeichen

### Symbole und Werte

- C*: Kondensator
- C: Kondensator
- I_{Bus}: Strom, der dem Bus entnommen wird
- I_{BUSMAX}: maximaler Busstrom, den die Stromquelle entnimmt
- I_{BUSMAXk}: maximaler Busstrom, den die Stromquelle im Zeitschlitz k einer Periode entnimmt
- I_{C}: Kondensatorladestrom
- I_{SP}: Strom, der der Stromquelle entnommen wird
- I_{SPMAX_i}: Maximalstrom der i-ten Stromquelle von m Stromquellen, wenn mehr als eine Stromquelle 16 verwendet wird
- I_{VSP}: Laststrom
- I_{VSP1}: Laststrom, der an den ersten Verbraucher / die erste Last durch das Vorschaltgerät an der ersten Verbraucherschnittstelle abgegeben wird
- I_{VSPk}: Laststrom, der an den k-ten Verbraucher / die k-te Last durch das Vorschaltgerät an der k-ten Verbraucherschnittstelle abgegeben wird
- I_{VSPn}: Laststrom, der an den n-ten Verbraucher / die n-te Last durch das Vorschaltgerät an der n-ten Verbraucherschnittstelle abgegeben wird
- U_{BUS}: Spannung zwischen den Bus-Anschlüssen
- U_{DIF}: Spannungsabfall über die Stromquelle
- U_{REF}: Referenzspannung
- U_{VSP}: Spannung, die an das Busgerät 14* durch das Vorschaltgerät abgegeben wird
- U_{VSP1}: Spannung, die an den ersten Verbraucher / die erste Last durch das Vorschaltgerät an der ersten Verbraucherschnittstelle abgegeben wird
- U_{VSPk}: Spannung, die an den k-ten Verbraucher / die k-te Last durch das Vorschaltgerät an der k-ten Verbraucherschnittstelle abgegeben wird
- U_{VSPn}: Spannung, die an den n-ten Verbraucher / die n-te Last durch das Vorschaltgerät an der n-ten Verbraucherschnittstelle abgegeben wird
- V_{REF}: Referenzspannung U_{REF}

### Bezugszeichen in den Figuren und der Beschreibung zum Stand der Technik

- 10*: erste Busleitung Abus
- 12*: zweite Busleitung Bbus
- 14*: Busgeräte 1 bis n*
- 16*: Spannungsversorgung
- 18*: Einheit zur Wandlung der Netzspannung in Busversorgungspannung
- 20*: Entkopplung
- 22*: Bus-Eingangsanschluss
- 23*: Bus-Masseleitung
- 26*: Schalter
- 28*: Knotenpunkt
- 29*: weiterer Knotenpunkt
- 30*: Lastanschluss
- 32*: zweiter Lastanschluss, typischerweise der Masseanschluss
- 34*: Messung der Spannung U_{VSP}, die die Vorschalteinrichtung an den Verbraucher abgibt
- 40*: regelbare Stromquelle
- 42*: Stelleinrichtung zur Regelung der Stromquelle 40*
- 44*: Strommesseinrichtung
- 46*: Messung des Stromes, den das Vorschaltgerät an den Busteilnehmer 14* abgibt
- 48*: Vorrichtung zur Temperaturmessung

### Bezugszeichen in den Figuren und der Beschreibung der Erfindung

- 1: Mittel zum Steuern der Stromquelle
- 2: Laststeuereinrichtung
- 3: Temperaturmesseinrichtung
- 4: Vorrichtung zum Messen des Stroms I_{SP}
- 5: Vorrichtung zum Messen des Stroms I_{VSP}
- 5_1: Vorrichtung zum Messen des Stroms I_{VSP1} der ersten Verbraucherschnittstelle
- 5_k: Vorrichtung zum Messen des Stroms I_{VSPk} der k-ten Verbraucherschnittstelle
- 5_n: Vorrichtung zum Messen des Stroms I_{VSPn} der n-ten Verbraucherschnittstelle
- 6: Potenzialmessvorrichtung zur Messung von U_{VSP}
- 6_1: Potenzialmessvorrichtung zur Messung von U_{VSP1} der ersten Verbraucherschnittstelle
- 6_k: Potenzialmessvorrichtung zur Messung von U_{VSPk} der k-ten Verbraucherschnittstelle
- 6_n: Potenzialmessvorrichtung zur Messung von U_{VSPn} der n-ten Verbraucherschnittstelle
- 7: Potenzialmessvorrichtung zur Messung von U_{DIF}
- 8: Trennvorrichtung, z.B. Schalter, zum Abwerfen der Last
- 8_1: Trennvorrichtung, z.B. Schalter, zum Abwerfen der Last der ersten Verbraucherschnittstelle
- 8_k: Trennvorrichtung, z.B. Schalter, zum Abwerfen der Last der k-ten Verbraucherschnittstelle
- 8_n: Trennvorrichtung, z.B. Schalter, zum Abwerfen der Last der n-ten Verbraucherschnittstelle
- 8': Steuersignal zur Betätigung der Trennvorrichtung 8 bzw. Signalbus bestehend aus den Signalen 14_1 bis 14_n zur Betätigung der Trennvorrichtungen 8_1 bis 8_n
- 8'_1: Steuersignal zur Betätigung der Trennvorrichtung 8_1 der ersten Verbraucherschnittstelle

- 8'_k: Steuersignal zur Betätigung der Trennvorrichtung 8_k der k-ten Verbraucherschnittstelle
- 8'_n: Steuersignal zur Betätigung der Trennvorrichtung 8_n der n-ten Verbraucherschnittstelle
- 9: Lastanschluss / Verbraucherschnittstelle
- 9_1: erster von n Lastanschlüssen / Verbraucherschnittstellen
- 9_k: k-ter von n Lastanschlüssen / Verbraucherschnittstellen
- 9_n: n-ter von n Lastanschlüssen / Verbraucherschnittstellen
- 10: zweiter Lastanschluss, typischerweise der Masseanschluss
- 10_1: zweiter Lastanschluss, typischerweise der Masseanschluss der ersten Verbraucherschnittstelle
- 10_k: zweiter Lastanschluss, typischerweise der Masseanschluss der k-ten Verbraucherschnittstelle
- 10_n: zweiter Lastanschluss, typischerweise der Masseanschluss der n-ten Verbraucherschnittstelle
- 11: Spannungsmessbus der n Spannungsmesssignale 11_1 bis 11_n
- 11_1: Spannungsmesssignal der Spannungsmessvorrichtung 6_1 der ersten von n Verbraucherschnittstellen
- 11_k: Spannungsmesssignal der Spannungsmessvorrichtung 6_k der k-ten von n Verbraucherschnittstellen
- 11_n: Spannungsmesssignal der Spannungsmessvorrichtung 6_n der n-ten von Verbraucherschnittstellen
- 12_1: Eingang der ersten Verbraucherschnittstelle
- 12_k: Eingang der k-ten Verbraucherschnittstelle
- 12_n: Eingang der n-ten Verbraucherschnittstelle
- 13: Strommessbus der n Strommesssignale 13_1 bis 13_n
- 13_1: Strommesssignal der Strommessvorrichtung 5_1 der ersten von n Verbraucherschnittstellen
- 13_k: Strommesssignal der Strommessvorrichtung 5_k der k-ten von n Verbraucherschnittstellen
- 13_n: Strommesssignal der Strommessvorrichtung 5_n der n-ten von n Verbraucherschnittstellen
- 15: Vorrichtung zum Messen des Ladestroms I_{C} des Kondensators C
- 16: programmierbare Stromquelle

- 17: zusätzlicher Schalter
- 18: Teile des Vorschaltgerätes, die bei einem Abschalten der Stromquelle 16 noch mit Energie versorgt werden sollen/müssen
- 19: Schalter zum Umschalten der Energieversorgung der Teile 18 des Vorschaltgerätes von einer durch die Stromquelle 16 strombegrenzten Energieversorgung auf eine direkte Versorgung aus dem Bus
- 20: optionaler Vorwiderstand zur Vermeidung von Busausfällen durch Kurzschlüsse in den Teilen 18, die direkt aus dem Bus versorgt werden sollen
- 22: Eingangsanschluss
- 23: Eingangsanschluss
- 25: Widerstand
- 26: Schalter
- 26': Steuersignal zur Betätigung des Schalters 26

## Patentansprüche

1. Verfahren zum Bereitstellen von Strom für mindestens einen an ein Busgerät angeschlossenen Verbraucher, wobei das Busgerät über zwei Eingangsanschlüsse (22,23) mit einem Bus gekoppelt ist und wobei einem dieser Eingangsanschlüsse (22) mindestens eine steuerbare Stromquelle (4) nachgeordnet ist, die einen Stromquellenstrom (I_{SP}) auf einer mindestens einem Verbraucher zugeordneten Seite bereitstellt und hierzu von der Seite des Eingangsanschlusses (22) einen Busstrom (I_{BUS}) und eine Spannung (U_{BUS}) empfängt, wobei ein von dem Stromquellenstrom (I_{SP}) abhängiger Laststrom (I_{VSP}) über die Gesamtheit der Verbraucher und jeweils ein zugehöriger Laststrom (I_{VSP}) über einen einzelnen Verbraucher fließt und hierbei an Ausgangsanschlüssen (9,10) für den mindestens einen Verbraucher eine Lastspannung (U_{VSP}) anliegt und wobei mindestens eine Lasttrennvorrichtung (8, 8_1 - 8_n, 16, 26) zum Abtrennen und/oder Deaktivieren mindestens eines Teils des Verbrauchers vorhanden ist, **dadurch gekennzeichnet, dass** die Abtrennung und/oder das Deaktivieren zumindest eines Teils des Verbrauchers erfolgt
i. in Abhängigkeit von der Stromstärke (I_{SP}) mindestens eines Stromquellenstroms oder in Abhängigkeit von zumindest einer Zeitableitung dieser Größen oder
ii. in Abhängigkeit von mindestens einer Laststromstärke (I_{VSP}) oder in Abhängigkeit von zumindest einer Zeitableitung dieser Größen oder
iii. in Abhängigkeit von mindestens einer im oder am Busgerät gemessenen Temperatur (T) oder in Abhängigkeit von zumindest einer Zeitableitung einer dieser Größen.

2. Verfahren nach Anspruch 1, **dadurch gekennzeichnet, dass** mindestens eine Stromquelle (16) und/oder mindestens ein Schalter (8, 8_1-8_n, 26) als Lasttrennvorrichtung benutzt wird.

3. Verfahren nach Anspruch 2, **dadurch gekennzeichnet, dass** für mindestens einen Teil der Zeit der Abtrennung zumindest eines Teils des Verbrauchers Teile (18) des Busgerätes direkt aus dem Bus unter Umgehung der Stromquelle(n) versorgt werden.

4. Verfahren nach Anspruch 3, **dadurch gekennzeichnet, dass** Teile des Busgerätes, die direkt aus dem Bus versorgt werden können, eine Abschaltung der Stromquelle aufheben können.

5. Verfahren nach einem der Ansprüche 1 bis 4, **dadurch gekennzeichnet, dass** der dem Bus entnommene Strom (I_{BUS}) nach Abschaltung der Stromquellen (16) nicht durch eine technische Vorrichtung begrenzt ist.

6. Verfahren nach einem der Ansprüche 1 bis 5, **dadurch gekennzeichnet, dass** Teile, die bei Abschaltung der Stromquelle (16) direkt aus dem Bus versorgt werden, in solchen anderen Fällen, in denen mindestens eine Stromquelle (16) nicht abgeschaltet ist, über mindestens einen dieser nicht abgeschalteten Stromquellen (16) versorgt werden, die ihre Energie aus dem Bus bezieht.

7. Verfahren nach einem der Ansprüche 1 bis 6, **dadurch gekennzeichnet, dass** bei Vorhandensein eines Energiespeichers, insbesondere in Form eines Kondensators (C), die Lasttrennvorrichtung (8, 8_1 bis 8_n, 16, 26) zwischen dem Energiespeicher und den Ausgangsanschlüssen (9,10) des Busgeräts angeordnet ist.

8. Vorschalteinrichtung für einen an ein Busgerät anschließbaren Verbraucher, wobei das Busgerät mit zwei Eingangsanschlüssen (22, 23) zum Anschließen des Busgeräts an einem Bus, und mit mindestens einem Paar von Lastanschlüssen (9,9_1 - 9_n, 10, 10_1 10_n) zum Anschließen zumindest eines elektrischen Verbrauchers versehen ist, wobei jedes Lastanschlusspaar (9,9_1 - 9_n, 10, 10_1 - 10_n) mit mindestens einem Eingangsanschluss (22, 23) gekoppelt ist, und wobei in der Verbindung eines ersten Eingangsanschlusses (22) mit einem ersten Lastanschluss (9,9_1 - 9_n) mindestens eines Lastanschlusspaars (9,9_1 - 9_n, 10, 10_1 - 10_n) eine Stromquelle (16) und mindestens eine durch Mittel (2) zum Steuern steuerbare Lasttrennvorrichtung (8, 8_1 - 8_n, 16, 26) zum Abtrennen und/oder Deaktivieren mindestens eines Teils des Verbrauchers angeordnet ist, die dazu ausgelegt ist, einen an dem besagten Lastanschlusspaar (9, 9_1 - 9_n, 10, 10_1 - 10_n) angebundenen Verbraucher elektrisch abzutrennen und/oder zu deaktivieren und wobei die Mittel (2) zum Steuern dazu ausgelegt sind zu bewirken, dass die Lasttrennvorrichtungen (8, 8_1 - 8_n, 16, 26) die Energieabgabe der Vorschalteinrichtung an den mindestens einen nachgeschalteten Verbraucher und/oder die Energieaufnahme durch die Vorschalteinrichtung und den mindestens einen nachgeschalteten Verbraucher aus dem Bus jeweils durch Lastabwurf und/oder Deaktivierung ändert,
**dadurch gekennzeichnet,**
**dass** der Umfang und die Art des Lastabwurfes und/oder der Deaktivierung von zumindest einer vorbestimmten Größe abhängig ist, die in der Gruppe enthalten ist, welche umfasst:
A) die vorgegebene Stromstärke (I_{SPMAX}) des von der Stromquelle (16) abgegebenen Stroms (I_{SP}) oder eine Zeitableitung dieser Größe,
B) mindestens eine Laststromstärke (I_{VSP1}-I_{VSPn}) oder eine Zeitableitung dieser Größe,
C) die Temperatur (T) von Teilen der Vorschalteinrichtung oder in der Nähe der Vorschalteinrichtung, insbesondere der Leistungstransistoren der Stromquelle oder eine Zeitableitung der Temperatur.

9. Vorschalteinrichtung nach Anspruch 8, **dadurch gekennzeichnet, dass** mindestens eine Stromquelle (16) zusätzlich zur Stromquellenfunktion die Funktion einer Lasttrennvorrichtung und/oder mindestens ein Schalter die Funktion der Lasttrennvorrichtung durchführt.

10. Vorschalteinrichtung nach Anspruch 8 oder 9, ferner mit Mitteln (5, 5_1-5_n, 6, 6_1-6_n, 15, 3, 4) zum Messen der vorbestimmten Größe entsprechend dem Merkmal ii, welche mit den Mitteln (2) zum Steuern gekoppelt sind.

11. Vorschalteinrichtung nach einem der Ansprüche 8 bis 10, ferner mit mindestens einem Energiespeicher (C) zur zumindest zeitweise möglichen Versorgung zumindest eines Lastanschlusspaares (10_i und 9_i mit 0<i<n+1), insbesondere in Form eines parallel zu dem mindestens einem Paar von Lastanschlüssen (10_i und 9_i mit 0<i<n+1) geschalteten Kondensators (C).

12. Vorschalteinrichtung nach Anspruch 11, **dadurch gekennzeichnet, dass** die Lasttrennvorrichtung (8, 8_1 - 8_n, 16, 26) einen ersten und einen zweiten Schalter aufweist, die in Reihe geschaltet sind und zwischen denen ein Knotenpunkt angeordnet ist, mit dem der Kondensator (C) gekoppelt ist.

13. Vorschalteinrichtung nach einem der Ansprüche 8 bis 12, **dadurch gekennzeichnet, dass** für den Fall, dass der Strom (I_{SP}) mindestens einer Stromquelle (16) auf Null gesetzt ist, Teile (18) der Vorschalteinrichtung weiterhin mit Energie aus dem Bus, insbesondere über einen Widerstand (20), der auch Null sein kann, versorgt werden.

14. Vorschalteinrichtung nach einem der Ansprüche 8 bis 13, **dadurch gekennzeichnet, dass** das Mittel (1) zum Steuern der Stromquelle (16) von einer Vorrichtung (24) zum Messen des Stroms (I_{BUS}) ein Signal empfängt und damit die Stromquelle (16) derart steuert, dass der Strom (I_{BUS}) demjenigen Strom entspricht, der von der Stromquelle (16) geliefert wird, und im Wesentlichen zu diesem Strom gleich ist, und zwar unabhängig davon, welchen Strom andere Netzwerkelemente (22,25), wie z.B. Spannungsquellen, Widerstände, Messverstärker, zusätzlich zur Stromquelle (16) einspeisen.

15. Vorschalteinrichtung nach einem der Ansprüche 8 bis 14, **dadurch gekennzeichnet, dass** zumindest einer der Teile (18) der Vorschalteinrichtung, die nach dem Abschalten zumindest einer Stromquelle (16) und/oder aller Stromquellen (16, 22) noch mit Energie aus dem Bus versorgt werden, diesen Abschaltzustand wieder aufheben kann.

16. Busgerät mit einer Vorschalteinrichtung nach einem der Ansprüche 8 bis 15, wobei in dem Busgerät an zumindest einem Lastanschlusspaar (9,9_1 - 9_n, 10, 10_1 - 10_n) zumindest ein elektrischer Verbraucher angeschlossen ist.

17. Busgerät mit einer Vorschalteinrichtung nach einem der Ansprüche 8 bis 15, wobei in dem Busgerät an zumindest einem Lastanschlusspaar (9,9_1 - 9_n, 10, 10_1 - 10_n) zumindest ein elektrischer Verbraucher angeschlossen ist, der durch die Vorschalteinrichtung deaktiviert und/oder aktiviert werden kann und/oder der gleichzeitig von einer anderen Energiequelle als dem Bus Energie beziehen kann und dessen Energieaufnahme aus dieser weiteren Energiequelle zumindest zweitweise gegenüber der maximal möglichen Energieaufnahme aus dieser weiteren Energiequelle reduziert ist, wenn dieser besagte Verbraucher durch die Vorschalteinrichtung bezüglich der Energieaufnahme aus dem Bus deaktiviert ist.

18. Bussystem mit einem Bus und einer Mehrzahl von daran über Klemmen (22,23) angeschlossenen Busgeräten, von denen zumindest eines ein Busgerät gemäß einem der Ansprüche 16 oder 17 ist oder eine Vorschalteinrichtung nach einem der Ansprüche 8 bis 15 aufweist.

## Claims

1. A method for providing electric power for at least one consumer connected to a bus device, wherein the bus device is coupled to a bus via two input connectors (22,23), and wherein one of these input connectors (22) has at least one controllable current source (4) arranged downstream of it which provides a current source current (I_{SP}) on a side assigned to at least one consumer and, for this purpose, receives a bus current (I_{BUS}) from the side of the input connector (22) and receives a voltage (U_{BUS}), wherein a load current (I_{VSP}) depending on the current source current (I_{SP}) is caused to flow across all of the consumers and respectively one associated load current (I_{VSP}) is caused to flow across an individual consumer and, in the process, output connectors (9,10) for the at least one consumer have a load voltage (U_{VSP}) applied to them, and wherein at least one load separating device (8, 8_1 - 8_n, 16, 26) exists for separating and/or deactivating at least a part of the consumer,
**characterized in**
**that** the separating and/or the deactivating of at least a part of the consumer is performed
i. depending on the amount of current (I_{SP}) of at least one current source current, or depending on at least one time derivative of - these magnitudes, or
ii. depending on at least one load amount of current (I_{VSP}), or depending on at least one time derivative of these magnitudes, or
iii. depending on at least one temperature (T) measured within or on the bus device, or depending on at least one time derivative of these magnitudes.

2. The method according to claim 1, **characterized in that** at least one current source (16) and/or at least one switch (8, 8_1 - 8_n, 26) is used as a load separating device.

3. The method according to claim 2, **characterized in that**, for at least a part of the time of the separation of at least a part of the consumer, parts (18) of the bus device are powered directly from the bus while bypassing the current source(s).

4. The method according to claim 3, **characterized in that** parts of the bus device that can be powered directly from the bus are adapted to terminate a switch-off of a current source.

5. The method according to any one of claims 1 to 4, **characterized in that**, after switch-off of a current sources (16), the current (I_{BUS}) taken from the bus is not delimited by a technical device.

6. The method according to any one of claims 1 to 5, **characterized in that**, in other cases where at least one current source (16) is not switched off, parts which upon switch-off of the current source (16) are directly powered from the bus, are powered via at least one of these non-switched off current sources (16) that receives its energy from the bus.

7. The method according to any one of claims 1 to 6, **characterized in that**, in case that an energy store exists, particularly in form of a capacitor (C), the load separating device (8, 8_1 - 8_n, 16, 26) is arranged between the energy store and the output connectors (9,10) of the bus device.

8. A power supply unit for a consumer which is connectible to a bus device, wherein the bus device is provided with two input connectors (22,23) for connecting the bus device to a bus and with at least one pair of load terminals (9, 9_1 - 9_n, 10, 10_1 - 10_n) for connecting at least one electrical consumer, wherein each pair of load terminals (9, 9_1 - 9_n, 10, 10_1 - 10_n) is coupled to at least one input connector (22,23), and wherein, in the connection of a first input connector (22) to a first load terminal (9, 9_1 - 9_n) of at least one pair of load terminals (9, 9_1 - 9_n, 10, 10_1 - 10_n), there are arranged a current source (16) and at least one load separating device (8, 8_1 - 8_n, 16, 26), controllable by control means (2), for separating and/or deactivating at least a part of the consumer, the load separating device (8, 8_1 - 8_n, 16, 26) being adapted to electrically separating a consumer coupled to said pair of load terminals (9, 9_1 - 9_n, 10, 10_1 - 10_n), and wherein the control means (2) are adapted to cause the load separating devices (8, 8_1 - 8_n, 16, 26) to change the energy output of the power supply unit to the at least one downstream-connected consumer and/or the energy input through the power supply unit and the at least one downstream-connected consumer from the bus respectively by means of load-shedding and/or deactivation,
**characterized in**
**that** the extent and the type of the load-shedding and/or of the deactivation are dependent on at least one predetermined magnitude which is contained in the group comprising:
A) the predetermined current amount (I_{SPMAX}) of the current (I_{SP}) emitted by the current source (16) or a time derivative of this magnitude,
B) at least one load current amount (I_{VSP1} - I_{VSPn}) or a time derivative of this magnitude,
C) the temperature (T) of parts of the power supply unit or the vicinity of the power supply unit, particularly the temperature of the power transistors of the current source or a time derivative of this magnitude.

9. The power supply unit according to claim 8, **characterized in that** at least one current source (16) performs, in addition to the current source function, the function of a load separating device, and/or at least one switch performs the function of the load separating device.

10. The power supply unit according to claim 8 or 9, further comprising means (5, 5_1 - 5_n, 6, 6_1 - 6_n, 15, 3, 4) for measuring the predetermined magnitude in correspondence to feature ii, said means being coupled to the control means (2).

11. The power supply unit according to any one of claims 8 to 10, further comprising at least one energy store (C) for at least temporarily possible powering of at least one pair of load terminals (10_i and 9_i, wherein 0<i<n+1), particularly in the form of a capacitor (C) connected parallel to the at least one pair of load terminals (10_i and 9_i, wherein 0<i<n+1).

12. The power supply unit according to claim 11, **characterized in that** the load separating device (8, 8_1 - 8_n, 16, 26) comprises a first and a second switch which are connected in series and have a node arranged between them that is coupled to the capacitor (C).

13. The power supply unit according to any one of claims 8 to 12, **characterized in that**, in case that the current (I_{SP}) of at least one current source (16) has been set to zero, parts (18) of the power supply unit continue to be supplied with energy from the bus, particularly via a resistance which may also be zero.

14. The power supply unit according to any one of claims 8 to 13, **characterized in that** the means (1) for controlling the current source (16) is operative to receive a signal from a device (24) for measuring the current (I_{BUS}) and thereby to control the current source (16) in such a manner that the current (I_{BUS}) corresponds to the current supplied from the current source (16) and is substantially equal to this current, irrespective of what current is supplied by other network elements (22,25) such as e.g. voltage sources, resistors, measurement amplifiers in addition to the current source (16).

15. The power supply unit according to any one of claims 8 to 14, **characterized in that** at least one of the parts (18) of the power supply unit that are still supplied with energy from the bus after switch-off of at least one current source (16) and/or of all current sources (16), is operative to reverse this switch-off state again.

16. A bus device comprising a power supply unit according to any one of claims 8 to 15, wherein, in the bus device, at least one pair of load terminals (9, 9_1 - 9_n, 10, 10_1 - 10_n) has an electrical consumer connected to it.

17. A bus device comprising a power supply unit according to any one of claims 8 to 15, wherein, in the bus device, at least one pair of load terminals (9, 9_1 - 9_n, 10, 10_1 - 10_n) has at least one electrical consumer connected to it which is adapted to be deactivated and/or activated by the power supply unit and/or which at the same time can receive energy from another energy source than the bus and whose energy intake from said other energy source is at least temporarily reduced relative to the maximally possible energy intake from said other energy source if said consumer has been deactivated by the power supply unit with respect to the energy intake from the bus.

18. A bus system comprising a bus and a plurality of bus devices connected to the bus by connector terminals (22,23), wherein at least one of the bus devices is a bus device according to any one of claims 16 or 17 or comprises a power supply unit according to any one of claims 8 to 15.

## Revendications

1. Procédé de mise à disposition de courant pour au moins un consommateur connecté à un dispositif de bus, le dispositif de bus étant connecté au bus via deux bornes d'entrée (22, 23) et au moins une source de courant (4) à commande étant montée en aval de l'une des bornes d'entrée (22), laquelle met à disposition, sur un côté orienté vers au moins un consommateur, un courant de source de courant (I_{SP}) et reçoit à cet effet du côté de la borne d'entrée (22) un courant de bus (I_{BUS}) et une tension (U_{BUS}), un courant de charge (I_{VSP}) fonction du courant de source de courant (I_{SP}) passant par l'ensemble des consommateurs et un courant de charge (I_{VSP}) respectivement correspondant passant par un consommateur individuel, une tension de charge (U_{VSP}) étant présente à des bornes de sortie (9, 10) pour au moins un consommateur et un dispositif de coupure de charge (8, 8_1 à 8_n, 16, 26) étant prévu pour couper et/ou désactiver au moins une partie du consommateur,
**caractérisé en ce que**
la coupure et/ou la désactivation d'au moins une partie du consommateur est effectuée
i. en fonction de l'intensité de courant (I_{SP}) d'au moins un courant de source de courant ou en fonction d'au moins une dérivée par rapport au temps de ces grandeurs ou
ii. en fonction d'au moins une intensité de courant de charge (I_{VSP}) ou en fonction d'au moins une dérivée par rapport au temps de ces grandeurs ou
iii. en fonction d'une température (T) mesurée dans ou sur le dispositif de bus ou en fonction d'au moins une dérivée par rapport au temps de ces grandeurs.

2. Procédé selon la revendication 1, **caractérisé en ce qu'**au moins une source de courant (16) et/ou au moins un commutateur (8, 8_1, à 8_n, 26) sont utilisés comme dispositif de coupure de charge.

3. Procédé selon la revendication 2, **caractérisé en ce que**, pendant au moins une partie du temps de coupure d'une partie du consommateur, des parties (18) du dispositif de bus sont alimentées directement à partir du bus en contournant la (ou les) source(s) de courant.

4. Procédé selon la revendication 3, **caractérisé en ce que** des parties du dispositif de bus qui sont aptes à être alimentées directement à partir du bus, sont conçues pour neutraliser une coupure de la source de courant.

5. Procédé selon l'une des revendications 1 à 4, **caractérisé en ce que** le courant (I_{BUS}) pris du bus après coupure des sources de courant (16) n'est pas limité par un dispositif technique.

6. Procédé selon l'une des revendications 1 à 5, **caractérisé en ce que** des parties qui, en cas de coupure de la source de courant (16), sont alimentées directement à partir du bus, le sont dans d'autres cas où au moins une source de courant (16) n'est pas coupée, via au moins une de ces sources de courant non coupées (16) qui reçoit son énergie à partir du bus.

7. Procédé selon l'une des revendications 1 à 6, **caractérisé en ce que**, en cas de présence un accumulateur d'énergie, notamment sous la forme d'un condensateur (C), le dispositif de coupure de courant (8, 8_1 à 8_n, 16, 26) est disposé entre l'accumulateur d'énergie et les bornes de sortie (9, 10) du dispositif de bus.

8. Dispositif d'entrée pour un consommateur conçu pour être connecté à un dispositif de bus, le dispositif de bus étant pourvu de deux bornes d'entrée (22, 23) pour la connexion du dispositif de bus à un bus et d'au moins une paire de bornes de charge (9, 9_1 à 9_n, 10, 10_1 à 10_n) pour la connexion d'au moins un consommateur électrique, chaque paire de bornes de charge (9, 9_1 à 9_n, 10, 10_1 à 10_n) étant couplée à au moins une borne d'entrée (22, 23), et dans la connexion d'une première borne d'entrée (22) à une première borne de charge (9, 9_1 à 9_n) d'au moins une paire de bornes de charge (9, 9_1 à 9_n, 10, 10_1 à 10_n) étant disposés une source de courant (16) et au moins un dispositif de coupure de charge (8, 8_1 à 8_n, 16, 26) apte à être commandé par des moyens de commande (2) pour la coupure et/ou la désactivation d'au moins une partie du consommateur, qui est conçu pour couper et/ou désactiver électriquement un consommateur connecté à ladite paire de bornes de charge (9, 9_1 à 9_n, 10, 10_1 à 10_n), et les moyens de commande (2) étant conçus pour obtenir que les dispositifs de coupure de charge (8, 8_1 à 8_n, 16, 26) changent le débit d'énergie du dispositif d'entrée vers ledit au moins un consommateur monté en aval et/ou la réception d'énergie provenant du bus par le dispositif d'entrée et ledit au moins un consommateur monté en aval, respectivement par coupure de charge et/ou désactivation,
**caractérisé en ce que**
l'envergure et la nature de la coupure de charge et/ou de la désactivation sont fonction d'une grandeur prédéterminée qui est comprise dans le groupe comprenant
A) l'intensité de courant (I_{SPMAX}) prédéterminée du courant (I_{SP}) débité par la source de courant (16) ou une dérivée par rapport au temps de cette grandeur ou
B) au moins une intensité de courant de charge (I_{VSP1} à I_{VSPn}) ou une dérivée par rapport au temps de cette grandeur ou
C) la température (T) de parties du dispositif d'entrée ou aux alentours du dispositif d'entrée, notamment des transistors de puissance de la source de courant ou une dérivée par rapport au temps de la température.

9. Dispositif d'entrée selon la revendication 8, **caractérisé en ce qu'**au moins une source de courant (16) remplit, en plus de la fonction de source de courant, la fonction d'un dispositif de coupure de charge et/ou au moins un commutateur remplit la fonction de dispositif de coupure de charge.

10. Dispositif d'entrée selon la revendication 8 ou 9, comprenant en outre des moyens (5, 5_1 à 5_n, 6, 6_1 à 6_n, 15, 3, 4) pour mesurer la grandeur prédéterminée selon la caractéristique il, qui sont couplés avec les moyens de commande (2).

11. Dispositif d'entrée selon l'une des revendications 8 à 10, comprenant en outre au moins un accumulateur d'énergie (C) pour une alimentation au moins temporairement possible d'au moins une paire de bornes de charge (10_i et 9_i avec 0<i<n+1), notamment sous la forme d'un condensateur (C) monté parallèlement à ladite au moins une paire de bornes de charge (10_i et 9_i avec 0<i<n+1).

12. Dispositif d'entrée selon la revendication 11, **caractérisé en ce que** le dispositif de coupure de charge (8, 8_1 à 8_n, 16, 26) comprend un premier et un deuxième commutateurs qui sont montés en série et entre lesquels est disposé un noeud auquel le condensateur (C) est couplé.

13. Dispositif d'entrée selon l'une des revendications 8 à 12, **caractérisé en ce que**, au cas où le courant (I_{SP}) d'au moins une source de courant (16) est mis à zéro, des parties (18) du dispositif d'entrée continuent à être alimentés en énergie à partir du bus, notamment via une résistance (20) qui peut aussi être zéro.

14. Dispositif d'entrée selon l'une des revendications 8 à 13, **caractérisé en ce que** le moyen (1) pour commander la source de courant (16) reçoit un signal d'un dispositif (24) pour mesurer le courant (I_{BUS}) et commande la source de courant (16) avec celui-ci d'une manière telle que le courant (I_{BUS}) corresponde au courant fourni par la source de courant (16) et soit sensiblement égal à ce courant, et cela indépendamment de la question de savoir quelle quantité de courant d'autres élément du réseau (22, 25) tels que, par exemple, des sources de tension, des résistances, des amplificateurs de mesure, contribuent en plus de la source de courant (16).

15. Dispositif d'entrée selon l'une des revendications 8 à 14, **caractérisé en ce qu'**au moins une des parties (18) du dispositif d'entrée qui continuent, après coupure d'au moins une source de courant (16) et/ou de toutes les sources de courant (16, 22), à être alimentées en énergie à partir du bus, est conçue pour arrêter cet état de coupure.

16. Dispositif de bus avec un dispositif d'entrée selon l'une des revendications 8 à 15, au moins un consommateur électrique étant connecté dans le dispositif de bus à au moins une paire de bornes de charge (9, 9_1 à 9_n, 10, 10_1 à 10_n).

17. Dispositif de bus avec un dispositif d'entrée selon l'une des revendications 8 à 15, dans le dispositif de bus, à au moins une paire de bornes de charge (9, 9_1 à 9_n, 10, 10_1 à 10_n), étant connecté au moins un consommateur électrique qui est conçu pour pouvoir être désactivé et/ou activé par le dispositif d'entrée et/ou qui, en même temps, peut recevoir de l'énergie à partir d'une autre source d'énergie que le bus et dont la consommation de l'énergie provenant de cette source d'énergie est au moins temporairement réduite par rapport à la consommation maximalement possible d'énergie provenant de cette source d'énergie lorsque ledit consommateur est désactivé par le dispositif d'entrée en ce qui concerne la consommation d'énergie.

18. Système de bus avec un bus ou une pluralité de dispositifs de bus y connectés via des bornes (22, 23) dont au moins un dispositif de bus est conforme à une des revendications 16 ou 17 ou qui comprend un dispositif d'entrée selon une des revendications 8 à 15.
